# EUROPEAN PATENT APPLICATION

(11) **EP 1 492 055 A2**
(43) Date of publication of application: **29.12.2004**
(21) Application number: 04014779.5
(22) Date of filing: 24.06.2004
(51) Int. Cl.: G07B 17/00

(54) **Method and system for tamper detection**

(30) Priority: 26.06.2003 US 606507
(71) Applicant: Pitney Bowes Inc., Stamford, CT 06926-0700 (US)
(72) Inventor: Athens, Thomas G., Derby, Connecticut 06418 (US); Parkos, Maria P., Southbury, Connecticut 06488 (US)
(74) Representative: HOFFMANN - EITLE

(57) **Abstract**

A system and method that can detect tampering with and verify the authenticity of data capture data in a value dispensing system (10) is provided. Audit records are generated at the beginning and end of an audit period that include register values, a time stamp, and a digital signature. The audit records and data capture data are sent to a data center (40) for signature verification and reconciliation of the value dispensing system usage by comparing the register values from the audit records with the values as contained within the data capture data for the audit period. If there are no discrepancies, the data capture data is deemed to be accurate and the data can be utilized to prepare reports with a high degree of certainty that it accurately reflects the actual usage of the value dispensing system (10).

## Description

The invention disclosed herein relates generally to secure value dispensing systems, and more particularly to a method and system for detection of tampering and verification of authenticity of data captured during an audit period for the secure value dispensing system.

One example of a value dispensing system is a postage evidencing system including an electronic postage meter and a printer for printing a postal indicia on an envelope or other mail piece. Electronic postage meters for dispensing postage and accounting for the amount of postage used are well known in the art. A postal security device (PSD) of the meter supplies evidence of the postage dispensed in the form of an indicia for printing on a mail piece, such as, for example, an envelope or the like.

The printed indicia typically employs cryptographically secured information including a postage value for the mail piece combined with other postal data that relate to the mail piece and the postage meter printing the indicium. The cryptographically secured information, typically referred to as a digital token or a digital signature, authenticates and protects the integrity of information, including the postage value, imprinted on the mail piece for later verification of postage payment. Since the digital token incorporates cryptographically secured information relating to the evidencing of postage payment, altering the printed information in an indicium is detectable by standard verification procedures.

The typical postage meter stores accounting information concerning its usage in a variety of registers. An ascending register tracks the total amount of postage dispensed by the meter over its lifetime. Thus, the ascending register is incremented by the amount of postage dispensed after each transaction. A descending register tracks the amount of postage available for use. Thus, the descending register is decremented by the amount of postage dispensed after each transaction. When the descending register has been decremented to some value insufficient for dispensing postage, the postage meter inhibits further printing of indicia until the descending register is re-supplied with funds.

In many instances it is desirable, or in some cases mandated by the postal authority, for the postage meters to maintain usage information. Such usage information can include, for example, the amount of postage dispensed by the meter, as well as other data, including, for example, total mail piece counts, piece counts for different classes of mail, piece counts for each different postage amount dispensed, etc. Such usage information, referred to as 'data capture' data, is typically stored outside of the secure boundary of the PSD. The usage information is typically compiled over a predetermined period of time, referred to as an audit period, such as, for example, weekly, monthly, or yearly. At the end of the determined audit period, the captured data for that audit period is transmitted to a data center, such as, for example, a data center operated by the meter manufacturer, where it is used to prepare reports. The prepared reports can be sent to the postal authority. These reports may then be utilized by the postal authorities (or the meter manufacturer) for such things, for example, as statistical analysis of use of the meter population, customer billing, etc.

There are problems, however, with the conventional system and method, as described above, for preparing data capture reports for a given audit period. One such problem is that the data capture data is blindly trusted for preparation of a report. The data capture data, however, may not be fully trustworthy when received from the postage meter. For example, since the usage information is not securely stored within the PSD, it is possible for a dishonest person to modify the data capture data before it is transmitted to the meter manufacturer. For example, the value of the total amount of postage dispensed during the audit period could be modified in such a way that this value is made lower than the actual value used. In cases where the reports are used for billing purposes, the postal authority would under bill the customer, based on the modified data capture report, and thus the postal authority would be defrauded of funds due.

There exists a need, therefore, for a method and system that can detect tampering with data capture data, as well as verify the authenticity of data capture data, in a value dispensing system.

The present invention alleviates the problems associated with the prior art and provides a system and method that can detect tampering with data capture data, as well as verify the authenticity of data capture data, in a value dispensing system.

In accordance with the present invention, at the beginning of an audit period, an audit record is generated by the postage meter that includes the current register values at the beginning of the audit period, a time stamp, and a digital signature generated by the PSD. This start of period audit record can be stored either within the postage meter or transmitted to the data center at the beginning of the audit period for storage at the data center. At the end of the audit period, a second audit record is generated by the postage meter that includes the register values at the end of the audit period, a time stamp, and a digital signature generated by the PSD. This end of period audit record is then transmitted to the data center, along with the data capture data and the start of period audit record (if not previously transmitted to the data center).

The data center, after obtaining both the end of period audit record and start of period audit record, will verify the digital signature of the both audit records. Successful verification of the digital signatures authenticates the PSD to the data center, and indicates that the register values and time stamps are valid, as any modification of the data contained within the audit records would result in a failure of the signature verification. The data center can then verify that the time stamps within the audit records correspond to the start and end dates of the desired data capture period, and then can reconcile the postage meter usage, i.e., register values, by comparing the difference between the register values from the start of period audit record and the end of period audit record with the values as contained within the data capture data for the audit period. Any discrepancies between these values indicates that the data capture data may not be correct, and a further investigation can be performed. If there are no discrepancies, the data capture data is deemed to be accurate and the data can be utilized to prepare reports with a high degree of certainty that it accurately reflects the actual usage of the postage meter.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, serve to explain the principles of the invention. As shown throughout the drawings, like reference numerals designate like or corresponding parts.

FIG. 1 illustrates in block diagram form a value dispensing system in accordance with the present invention;

FIG. 2 illustrates in flow chart form the processing of audit records and data capture data by a value dispensing system in accordance with the present invention; and

FIG. 3 illustrates in flow chart form the processing of audit records and data capture data received from a value dispensing system by a data center in accordance with the present invention.

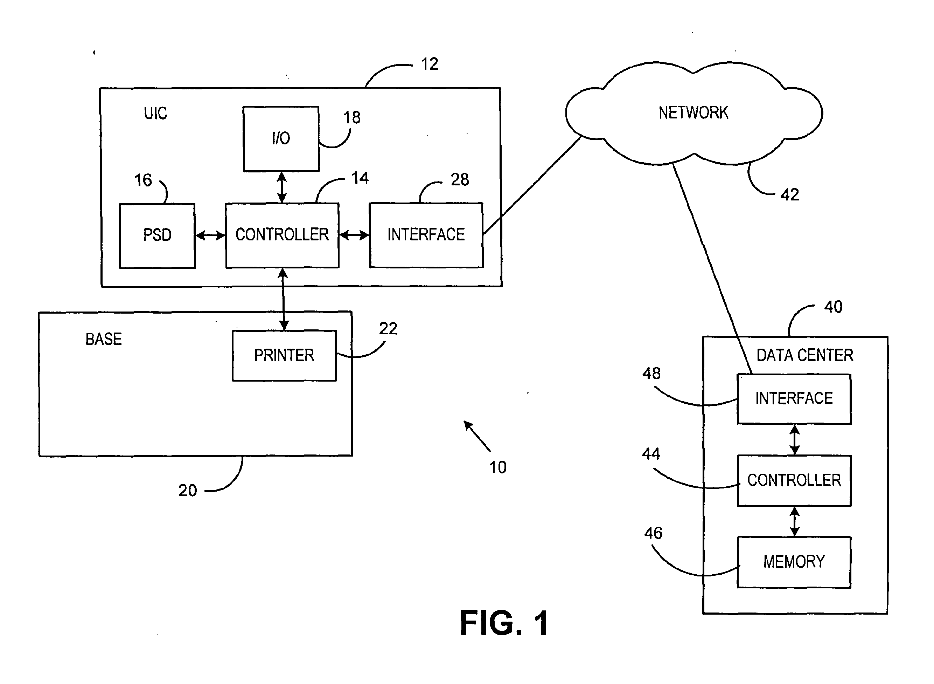

In describing the present invention, reference is made to the drawings, wherein there is seen in Fig. 1 in block diagram form a value dispensing system 10 in accordance with the present invention. The value dispensing system 10 may be, for example, a postage meter provided as part of a mail processing device, such as a mailing machine or the like. While the present invention will be described with respect to a postage meter, it should be understood that the present invention is not so limited and can be utilized with any type of value dispensing system.

The value dispensing system can include a control device 12, hereinafter referred to as a User Interface Controller (UIC), that performs user interface and controller functions for the system 10. The UIC 12 is coupled to a base 20, such as, for example, a mailing machine for processing mail items. Base 20 includes a printer 22 used to print value bearing indicia, generated in the UIC 12, on mail items. UIC 12 further includes one or more input/output devices 18, such as, for example, a keyboard and/or display unit for the input and output of various data and information. The UIC 12, in conjunction with one or more embedded processors or controllers 14, provides all user interfaces, executes control of the value dispensing system 10, calculates postage for debit based upon rate tables, provides the conduit for a Postal Security Device (PSD) 16 to transfer postage indicia to the printer 22, operates with peripherals for accounting, printing and weighing, and conducts communications with a data center 40 via a network 42 for postage funds refill, software download, rates download, and market-oriented and billing information data capture. The PSD 16 contains one or more registers that store the accounting information concerning usage, such as, for example, an ascending register, descending register, total piece count register, and the like. As such, the PSD 16 must be secure, i.e., the PSD 16 must be safeguarded against tampering with the registers or operation to prevent any type of fraudulent use or manipulation of the funds stored therein. The UIC 12, in conjunction with the PSD 16, provides the system meter that satisfies U.S. and international postal regulations regarding closed system information-based indicia postage (IBIP) meters.

As noted above, the UIC 12 conducts communications with a data center 40 via a network 42 for postage funds refill, software download, rates download, and market-oriented and billing information data capture. Such communications could be facilitated, for example, using interface circuit 28, such as, for example, a modem or the like. Data center 40 can include, for example, one or more controllers 44 and an associated memory 46. Data center 40 can also include an interface circuit 48 for facilitating communications between the data center 40 and value dispensing system 10 via network 42. Network 42 can be, for example, a public switched telephone network (PSTN) or other data network, such as, for example, the Internet. In accordance with the present invention, system 10 provides a system and method such that the data center 40 can detect tampering with the data capture data, as well as verify the authenticity of the data capture data, sent from the UIC 12 as described below.

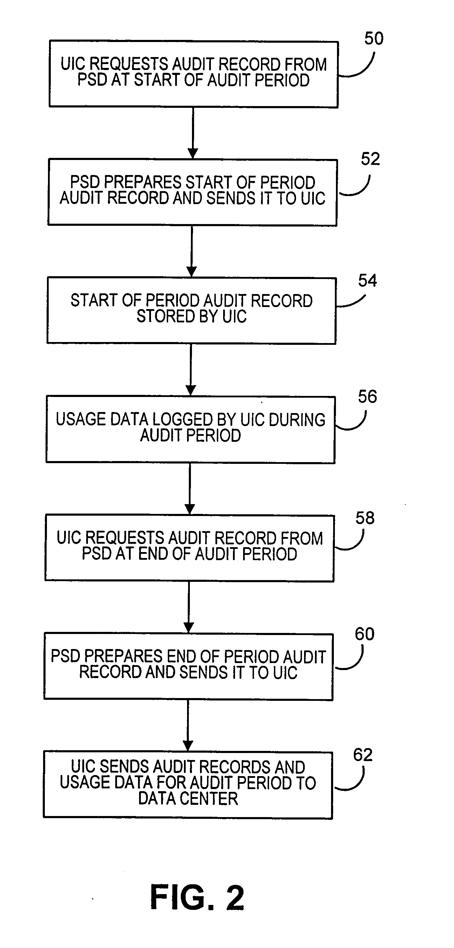

Referring now to Fig. 2, there is illustrated in flow chart form the processing of data capture data by the value dispensing system 10 in accordance with the present invention. At the beginning of the audit period, at step 50, the processor 14 of the UIC 12 requests an audit record from the PSD 16. This initial audit record will be referred to hereinafter as the start of period audit record. In step 52, the PSD 16 prepares the start of period audit record, which preferably contains one or more current register values and a digital signature generated by the PSD 16. The current register values preferably include the value for a plurality of registers maintained within the PSD 16, such as, for example, the ascending register value, the descending register value, total piece count register value, etc. The start of period audit record also preferably includes a time stamp. The time stamp can be obtained from a real time clock (not shown) within the PSD 16 or UIC 12, and preferably includes at least the date and can also include the actual time of day. Preferably, the audit period begins and ends at some time of minimal use of the value dispensing system 10, such as, for example, midnight. The digital signature is preferably generated by the PSD 16 utilizing a private key stored within the PSD 16. For example, PSD 16 will create a hash of the data being signed, including the register values and time stamp (as well as any other desired information, such as, for example, information identifying the PSD 16), and then utilize the private key and hash to create a digital signature.

In step 54, the start of period audit record, including the register values, time stamp, and digital signature, prepared by the PSD 16 in step 52 is sent to the controller 14. The start of period audit record can be stored within a memory (not shown) in the UIC 12, or optionally could be sent to the data center 40, via network 42, and stored within the memory 46 of data center 40 in a location associated with the UIC 12 for later retrieval. In step 56, the usage data for the value dispensing system 10 is logged by the UIC 12 for the audit period. The usage data includes information similar to that as contained in the audit record along with additional, more detailed data. For example, the usage data could include the total amount of postage dispensed during the audit period (similar to the ascending register value) and the total piece count. The usage data would also include, however, a more detailed breakdown of the total piece count, such as, for example, piece counts for different classes of mail, piece counts for each different postage amount dispensed, etc. The audit period could be, for example, one week, one month, or any other predetermined period of time as desired. The usage data could be compiled over any different time period, such as, for example, daily usage, weekly usage, bi-weekly usage, etc.

In step 58, at the end of the audit period the processor 14 of the UIC 12 requests a second audit record from the PSD 16. This second audit record will be referred to hereinafter as the end of period audit record. In step 60, the PSD 16 prepares the end of period audit record similarly as described above with respect to the start of period audit record, except the end of period audit record includes the register values from the PSD 16 at the end of the audit period. The end of period audit record, including the register values, time stamp, and digital signature, is sent by the PSD 16 to the controller 14 of the UIC 12. In step 62, the start of period audit record (if not previously sent), the end of period audit record, and the usage data logged by the UIC 12 for the audit period are sent to the data center 40 via network 42.

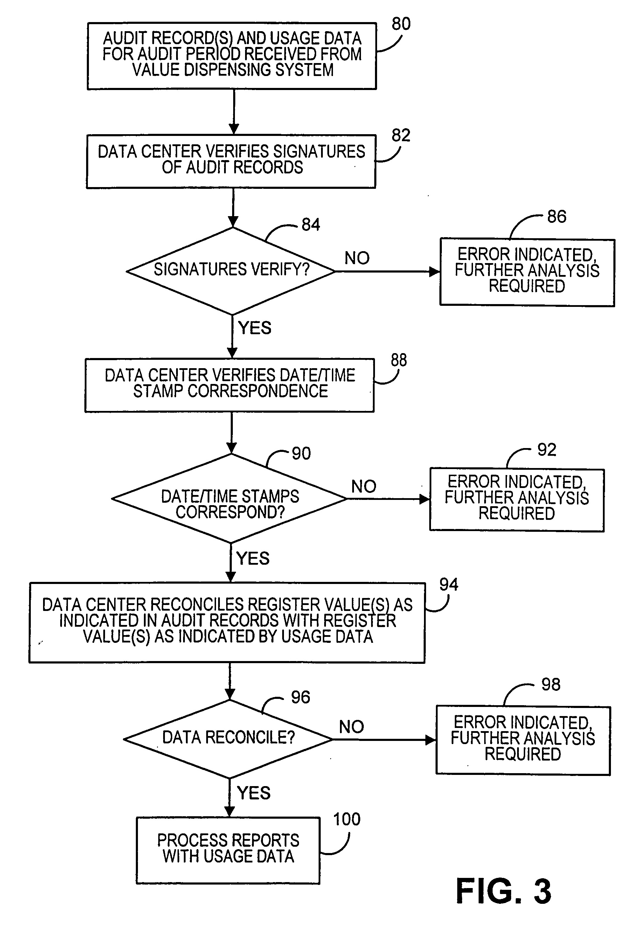

Referring now to Fig 3, there is illustrated in flow chart form the processing of the audit records and data capture data received from the value dispensing system 10 performed by the data center 40 in accordance with the present invention. In step 80, the start of period audit record (if not previously received and stored, for example, in memory 46), the end of period audit record, and the usage data logged by the UIC 12 for the audit period are received by the data center 40 via network 42. If the start of period audit record was previously received and stored memory 46 in the data center 40, the controller 44 will retrieve the start of period audit record for the value dispensing system 10 upon receipt of the end of period audit record and usage data. In step 82, the data center 40 will attempt to verify the signature included with the start of period audit record and the end of period audit record. It should be noted that if the start of period audit record is received before the end of period audit record and usage data and stored in the memory 46, verification of the digital signature included in the start of period audit record could be performed before the start of period audit record is stored in memory 46 or at any time thereafter. Signature verification could be performed, for example, by the controller 44 utilizing the corresponding public key of the private key used to generate the signatures by the PSD 16. For example, the controller 44 of data center 40 will create a hash of the data received with the audit record, including all of the information utilized in creating the digital signature, and then utilizing the created hash, the digital signature, and the public key of the PSD 16, determine if the signature verifies. The signature will not verify, for example, if a key other than the private key of the PSD 16 was used to create the signature, thus indicating that the audit record may not have been generated by the PSD 16. The signature will also not verify, for example, if the data, i.e., register values, time stamp, etc., received in the audit record have been altered. In this situation, the hash created from the data will not be equivalent to the hash used to generate the digital signature, thus resulting in a failure of the signature to verify. Successful verification of the digital signatures authenticates the PSD 16 to the data center 40, and indicates that the register values, time stamps and other data included within the audit records are valid. In step 84, it is determined if the signature of each of the audit records verifies. If a signature does not verify, then in step 86 an error is indicated and further analysis of the audit records and usage data is necessary before any reports can be reliably generated from the usage data.

If in step 84 it is determined that the signature of each of the start of period audit record and end of period audit record are verified, then in step 88 the data center 40 will verify that the time stamp in the start of period audit record corresponds to the date and/or time of the beginning of the audit period, and that the time stamp in the end of period audit record corresponds to the date and/or time of the end of the audit period. Such verification could be performed, for example, by controller 44. If one or both of the time stamps do not correspond, it will not be possible to reconcile the usage data (as described below) and thus in step 92 an error is indicated and further analysis of the audit records and usage data is necessary before any reports can be reliably generated from the usage data.

If in step 90 it is determined that the time stamp in the start of period audit record corresponds to the date and/or time of the beginning of the audit period, and the time stamp in the end of period audit record corresponds to the date and/or time of the end of the audit period, then in step 94 the data center 40 will reconcile the values of one or more registers as indicated by the audit records with the data as indicated by the usage data for the audit period as received from the value dispensing system 10. Reconciliation could be performed, for example, by controller 44. Such reconciliation includes, for example, determining the difference of the register value between the end of the audit period to the beginning of the audit period, and comparing that difference with the register value provided in the usage data. Note that the inclusion and verification of the digital signature, securely generated within the value dispensing system 10 by the PSD 16, in the start of period and end of period audit records provides assurance that any register values included in the audit records are both authentic and valid, and thus trustworthy. If the difference between the register value of the end of period audit record and start of period audit record is not the same as the total register value provided in the usage data for the audit period, the data does not reconcile and in step 98 an error is indicated and further analysis of the audit records and usage data is necessary before any reports can be reliably generated from the usage data. If the difference between the register value of the end of period audit record and start of period audit record is the same as the value provided in the usage data for the audit period, the data does reconcile and in step 100 the data center 40 can process reports with a high degree of certainty that any reports generated accurately reflect the actual usage of the value dispensing system 10.

For example, suppose register values included in the audit records are the ascending register, which, as previously noted, tracks the total amount of postage dispensed by the postage meter, and total piece count, which counts the total number of mail pieces for which postage was generated. If the value of the ascending register in the start of period audit record is $100, and the value of the ascending register in the end of period audit record is $250, the difference is $150, indicating that during the audit period the postage meter dispensed $150 worth of postage. Similarly, if the total piece count in the start of period audit record is 100, and the total piece count in the end of period audit record is 500, the difference is 400, indicating that 400 mail pieces have been processed by the PSD 16 during the audit period. The difference of $150 will be compared with the total value of postage dispensed as provided in the usage data for the audit period and the difference of 400 will be compared with the total number mail pieces processed as provided in the usage data for the audit period. Thus, the total postage dispensed by the postage meter for the audit period should be $150, and the total number of mail pieces processed should be 400. If the potage dispensed totals $150 and the number of mail pieces processed totals 400 as indicated by the usage data for the audit period, the data reconciles, and therefore can be considered accurate and trustworthy, and accurate reports can be generated utilizing the usage data. If the total postage dispensed as indicated in the usage data for the audit period is not $150 or the total number of mail pieces processed is not 400, the data does not reconcile, indicating that the data in the usage data may not be accurate and therefore not trustworthy to generate accurate reports. Thus, by providing benchmarks for reconciliation, i.e., one or more register values within the audit records, the contents of the usage data, including the additional data not contained within the audit records, can be reconciled to ensure the accuracy and trustworthiness of the usage data.

Thus, according to the present invention, a system and method are provided to detect tampering with data capture data, as well as verify the authenticity of data capture data, in a value dispensing system. While preferred embodiments of the invention have been described and illustrated above, it should be understood that they are exemplary of the invention and are not to be considered as limiting. Additions, deletions, substitutions, and other modifications can be made without departing from the spirit or scope of the present invention. Accordingly, the invention is not to be considered as limited by the foregoing description but is only limited by the scope of the appended claims.

## Claims

1. A method for a value dispensing device to process usage data for an audit period comprising:
generating a first audit record at a start of the audit period, the first audit record including at least one register value at the start of the audit period and a first digital signature;
logging the usage data for the audit period; and
generating a second audit record at an end of the audit period, the second audit record including the at least one register value at the end of the audit period and a second digital signature.

2. The method of claim 1, further comprising:
providing the first audit record, the second audit record, and the usage data for the audit period to a data center.

3. The method of claim 1 or 2, wherein the first audit record and the second audit record further include a time stamp.

4. The method of claim 1, 2 or 3, wherein the at least one register value in the first and second audit records includes an ascending register value.

5. The method of any preceding claim, wherein the at least one register value in the first and second audit records includes a total piece count register value.

6. The method of any preceding claim, wherein the first and second digital signatures are generated utilizing a private key.

7. The method of any preceding claim, wherein generating a first audit record further comprises:
storing the first audit record in the value dispensing system.

8. The method of any preceding claim, wherein generating a first audit record further comprises:
providing the first audit record to a data center before the end of the audit period.

9. The method of any preceding claim, wherein the value dispensing system is a postage meter, and the usage data includes at least one of a total amount of postage dispensed during the audit period, a total count of mail pieces processed during the audit period, a piece count for different classes of mail processed during the audit period, and a piece count for each different postage amount dispensed during the audit period.

10. A value dispensing system comprising:
means (14) for generating a first audit record at a start of an audit period, the first audit record including at least one register value at the start of the audit period and a first digital signature;
means (14) for logging the usage data for the audit period; and
means (14) for generating a second audit record at an end of the audit period, the second audit record including the at least one register value at the end of the audit period and a second digital signature.

11. The value dispensing system of claim 10, further comprising:
means (28) for providing the first audit record, the second audit record, and the usage data for the audit period to a data center (40).

12. The value dispensing system of claim 10 or 11, wherein the first audit record and the second audit record further include a time stamp.

13. The value dispensing system of claim 12, wherein the time stamp includes a date and a time.

14. The value dispensing system of any one of claims 10 to 13, wherein the at least one register value in the first and second audit records includes a plurality of register values.

15. The value dispensing system of any one of claims 10 to 14, wherein the at least one register value in the first and second audit records includes an ascending register value.

16. The value dispensing system of claim 15, wherein the at least one register value in the first and second audit records includes a total piece count register value.

17. The value dispensing system of any one of claims 10 to 16, wherein the first and second digital signatures are generated utilizing a private key.

18. The value dispensing system of any one of claims 10 to 17, wherein the value dispensing device is a postage meter, and the usage data includes at least one of a total amount of postage dispensed during the audit period, a total count of mail pieces processed during the audit period, a piece count for different classes of mail processed during the audit period, and a piece count for each different postage amount dispensed during the audit period.
